# EUROPEAN PATENT SPECIFICATION

(11) **EP 3 938 659 B1**
(45) Date of publication and mention of the grant of the patent: **25.10.2023**
(21) Application number: 20770966.8
(22) Date of filing: 10.03.2020
(51) Int. Cl.: F15B 3/00, E21B 33/035, E21B 33/06, E21B 33/064, E21B 34/04, F15B 1/24, F15B 21/00

(54) **SUBSEA PISTON ACCUMULATOR**
UNTERWASSERKOLBENSPEICHER
ACCUMULATEUR À PISTON SOUS-MARIN

(30) Priority: 12.03.2019 US 201962817146 P; 03.03.2020 US 202016807359
(43) Date of publication of application: 19.01.2022
(73) Proprietor: Reel Power Licensing Corp., Oklahoma City, OK 73179 (US)
(72) Inventor: SCHMIDT, Nathan, Oklahoma City, OK 73179 (US); HUANG, Eston, Oklahoma City, OK 73179 (US)
(74) Representative: CSY London
(86) International application number: PCT/US2020/021800
(87) International publication number: WO 2020/185732

(56) References cited:
- WO-A1-2015/164314
- WO-A1-2016/133400
- US-A1- 2012 138 159
- US-A1- 2013 340 421
- US-A1- 2015 322 972
- US-A1- 2016 356 290

## Description

In general, the present invention relates to a device for subsea piston accumulators utilized with blowout preventers in oil and gas well operations. More particularly, the present invention provides an improved accumulator system by including pressure sensors for the gas bottle and a positioning sensor system for the piston in the hydraulic bottle of subsea accumulators.

As known in the art, a blowout preventer is a large, specialized valve or similar mechanical device, usually installed redundantly in stacks, used to seal, control and monitor oil and gas wells. Blowout preventers were developed to cope with extreme erratic pressures and uncontrolled flow, often referred to as a formation kick, emanating from a well reservoir during drilling. Kicks can lead to a potentially catastrophic event known as a blowout. In addition to controlling the downhole pressure occurring in the drilled hole and the flow of oil and gas, blowout preventers are intended to prevent tubing such as drill pipe and well casing, tools and drilling fluid from being blown out of the wellbore when a blowout threatens.

A typical subsea deep-water blowout preventer system includes hydraulic accumulators module that maintains the hydraulic fluid pressures needed to actuate valves on the blowout preventer. A subsea accumulator stores hydraulic fluid under pressure and must release the hydraulic fluid on demand to provide fast closure of the preventers and for cycling all critical components. The fluid to be pressurized is typically an oil-based product or a water based product with added lubricity and corrosion protection and are generally stored in what is referred to as the hydraulic bottle. Accumulators with a piston typically have a piston sliding up and down a seal bore to separate the fluid from the gas.

It is also known that a depth compensated piston accumulator must maintain a constant working fluid pressure in the working fluid chamber at any depth. At the surface, the nitrogen chamber is charged to a specific pressure, which exerts a force on top of the piston, which in turn pressurizes the working hydraulic fluid on the other side of the piston. As the accumulator is lowered deeper into the ocean, the ambient seawater pressure squeezes the hydraulic fluid in the bladder to the same pressure. This seawater pressure from the bladder is exerted on top of the piston in the seawater chamber. Essentially, all of the pressure force that is lost from the nitrogen due to the increased water pressure in very deep water is regained by directing that ambient pressure to the seawater chamber.

Blowout preventers are obviously extremely critical to well operations. Thus, there is a need for an apparatus that provides a system to monitor the pressure in the nitrogen tank and piston position in the hydraulic tank for use with a subsea piston accumulator. It is desirable to fill these needs with reliable technology that are affordable and attractive to accumulator operations associated with blowout preventers. The above discussed limitations in the prior art is not exhaustive. The current invention provides an inexpensive, time saving, more reliable apparatus where the prior art fails.

US2015/322972 discloses a method of trapping stored gas within a gas bottle during service operations so that the stored gas and energy are not lost.

### SUMMARY OF THE INVENTION

In view of the foregoing disadvantages inherent in the known types of accumulators utilized with blowout preventers now present in the prior art, the present invention provides a new and improved subsea piston accumulator that provides better accumulator performance. As such, the general purpose of the present invention, which will be described subsequently in greater detail, is to provide a new and improved sensor system for use with subsea piston accumulators for blowout preventers, which has all the advantages of the prior art devices and none of the disadvantages.

The invention provides a subsea piston accumulator according to claim 1. The present invention therefore improves subsea piston accumulators by providing a pressure sensor at the top of an accumulator nitrogen bottle and a further pressure sensor at the bottom. This provides accurate information on the bottle's performance as well as a warning if pressures are too high or too low. There is also provided a piston positioning sensor in the hydraulic bottle for determining the piston position relative to function. This may also provide a warning if the position of the piston is not optimal.

There has thus been outlined, rather broadly, the more important features of the invention in order that the detailed description thereof that follows may be better understood and in order that the present contribution to the art may be better appreciated. There are, of course, additional features of the invention that will be described hereinafter and which will form the subject matter of the claims appended hereto.

In this respect, before explaining at least one embodiment of the invention in detail, it is to be understood that the invention is not limited in this application to the details of construction and to the arrangements of the components set forth in the following description or illustrated in the drawings. Also, it is to be understood that the phraseology and terminology employed herein are for the purpose of description and should not be regarded as limiting. As such, those skilled in the art will appreciate that the conception upon which this disclosure is based may readily be utilized as a basis for the designing of other structures for carrying out the several purposes of the present invention.

Therefore, it is an object of the present invention to provide a new and improved piston accumulator apparatus for use in subsea piston accumulators.

Furthermore, an object of the present invention is to provide a new and improved piston accumulator apparatus which allows for knowing the position of the piston in the hydraulic bottle. For a better understanding of the invention, its operating advantages, and the specific objects attained by its uses, reference should be had to the accompanying drawings and descriptive matter in which there are illustrated preferred embodiments of the invention.
The invention will be better understood and objects other than those set forth above will become apparent when consideration is given to the following detailed description thereof. Such description makes reference to the annexed drawings.

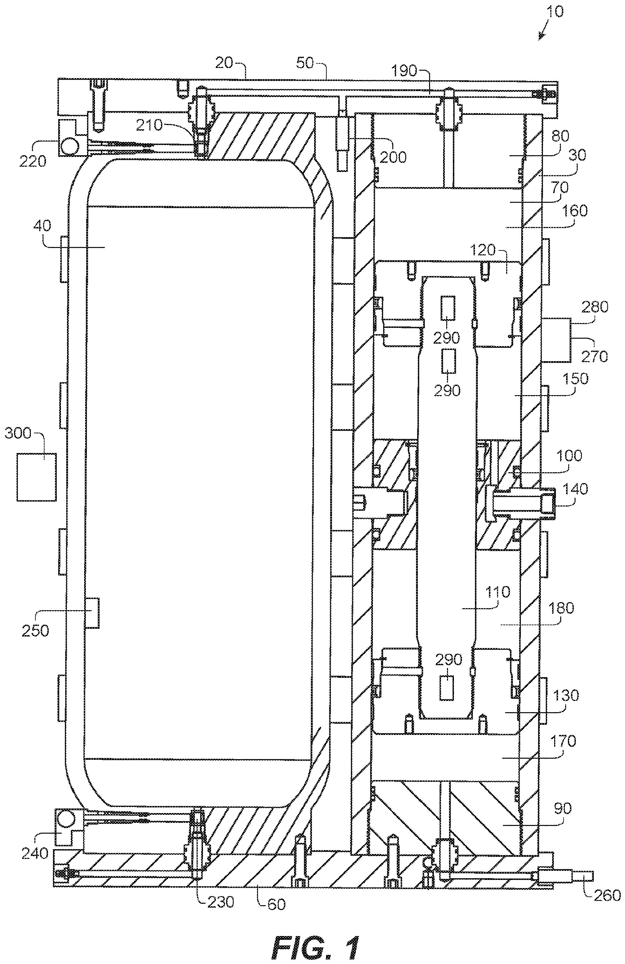

Figure 1 is a general illustration of a preferred embodiment in accordance with the invention.

### DETAILED DESCRIPTION OF INVENTION

Referring to the illustrations, drawings, and pictures, and to Figure 1 in particular, reference character 10 generally designates a new and improved piston accumulator apparatus of using same constructed in accordance with the present invention. Invention 10 is generally used in oil and gas well operations such as but not limited to blowout preventers and may be utilized in other operations not associated with oil and gas drilling operations. For purposes of convenience, the reference numeral 10 may generally be utilized for the indication of the invention, portion of the invention, preferred embodiments of the invention and so on.

Referring now to Figure 1, a dual bottle accumulator 20 is shown with a hydraulic bottle 30, a gas bottle 40, an upper mounting plate 50, and lower mounting plate 60. Hydraulic bottle 30 comprises a cylinder 70, an upper bulkhead 80, and lower bulkhead 90, a center bulkhead 100, a piston rod 110, an upper piston 120, and a lower piston 130.

Porting pin 140 is ported to chamber 150 for receiving and dispensing working fluid and which is pressurized as a function of the nitrogen pressure inside upper chamber 160. Upper chamber 160 has gas supply such as but not limited to nitrogen provided from bottle 40.

Lower chamber 170 has atmospheric pressure or is functionally a vacuum. Chamber 180 has seawater environmental pressure. Chamber 150 has working fluid within which is pressurized as a function of the nitrogen pressure within lower chamber 160 and the environmental pressure within chamber 180.

### PRESSURE SENSOR SYSTEM

Cylinder 70 is in communication with bottle 40 via porting 190, which includes a pressure transducer 200. Bottle 40 has have a top valve 210 activated by rotary actuator 220 and a bottom valve 230 activated by rotary actuator 240. Valves 210 and 230 may be ball valves although other valves are contemplated such as but not limited to globe, plug, needle, gate and so forth.

Pressure transducer 200 is provided to determine the pressure of the gas in bottle 40 and upper chamber 160. There is also provided a pressure sensor 250 inside bottle 40. This allows the ability to measure when valve 210 is closed. There is also provided a further pressure transducer 260 to measure pressure in lower chamber 170.

### PISTON POSITION SENSOR

There is also provided a piston position sensor system 270, which includes a sensor 280 in communication with piston rod 110. Sensor 280 is a receiver and piston rod 110 is fitted with transponder(s) 290. Invention 10 contemplates but is not limited to sensor 280 being RFID, ultrasonic, magnetic, inductive, and or combinations thereof.

### MONITORING SYSTEM

Invention 10 provides a monitoring and display system 300 that monitors and displays remotely the readings of pressure transducer 200, pressure transducer 250, pressure transducer 260, sensor 280, and so forth. Monitoring system 300 also provides remote control of top valve 210 rotary actuator 220 and bottom valve 230 rotary actuator 240 and or indicate open/close status. Monitoring system 300 may include displays, be in communication with a master well controller, provide wired and or wireless connection, and so forth.

## Claims

1. A subsea piston accumulator (20) for being utilized with blowout preventers in oil and gas well operations comprising:
a hydraulic bottle (30), having a cylinder (70), an upper bulkhead (80), and a lower bulkhead (90), a center bulkhead (100), a piston rod (110) centered in said center bulkhead (100) having an upper piston (120), a lower piston (130) wherein said upper bulkhead (80) and said upper piston (120) define an upper chamber (160) and said lower bulkhead (90) and said lower piston (130) define a lower chamber (170) wherein said lower chamber has a first pressure transducer (260) to measure pressure in said lower chamber (170);
a gas bottle (40) having a chamber for holding gas, a top valve (210) controlled by a top rotary actuator (220) for opening and closing said top valve (210), a bottom valve (230) controlled by a bottom rotary actuator (240) for opening and closing said bottom valve (230), and a pressure sensor (250) in said chamber to measure pressure in said chamber;
a port (190) between said gas bottle and said upper chamber of said cylinder wherein said port has a second pressure transducer (200) for measuring the pressure of the upper chamber of said cylinder and said chamber of said gas bottle (40);
a piston position sensor system (270) having a receiving sensor (280) mounted on said hydraulic bottle (30), a transponder (290) mounted on said piston rod (110), and wherein said receiver sensor (280) and said transponder (290) are adapted to provide a position of said piston rod (110) in said cylinder (70); and
a monitoring and display system (300) in communication with said first pressure transducer (260), said pressure sensor (250), said second pressure transducer (200), said receiving sensor (280), said transponder (290), said top rotary actuator (220) of said top valve (210), said bottom rotary actuator (240) of said bottom valve (230), and wherein said monitoring and display system (300) is adapted to open and close respectively said top valve (210) and said bottom valve (230) as desired.

## Patentansprüche

1. Untersee-Kolbendruckspeicher (20) zur Verwendung mit Bohrlochsicherungen in Öl- und Gasbohrungsarbeiten, umfassend:
eine Hydraulikflasche (30) mit einem Zylinder (70), einer oberen Trennwand (80) und einer unteren Trennwand (90), einer mittleren Trennwand (100), einer Kolbenstange (110), die in der mittleren Trennwand (100) zentriert ist und einen oberen Kolben (120), einen unteren Kolben (130) aufweist, wobei die obere Trennwand (80) und der obere Kolben (120) eine obere Kammer (160) definieren und die untere Trennwand (90) und der untere Kolben (130) eine untere Kammer (170) definieren, wobei die untere Kammer einen ersten Druckwandler (260) aufweist, um den Druck in der unteren Kammer (170) zu messen;
eine Gasflasche (40) mit einer Kammer zum Halten von Gas, einem oberen Ventil (210), das durch einen oberen Drehaktor (220) zum Öffnen und Schließen des oberen Ventils (210) gesteuert wird, einem unteren Ventil (230), das durch einen unteren Drehaktor (240) zum Öffnen und Schließen des unteren Ventils (230) gesteuert wird, und einem Drucksensor (250) in der Kammer zum Messen des Drucks in der Kammer;
einen Kanal (190) zwischen der Gasflasche und der oberen Kammer des Zylinders, wobei der Kanal einen zweiten Druckwandler (200) zum Messen des Drucks der oberen Kammer des Zylinders und der Kammer der Gasflasche (40) aufweist;
ein Kolbenpositionssensorsystem (270) mit einem an der Hydraulikflansche (30) angebrachten Empfangssensor (280), einem an der Kolbenstange (110) angebrachten Transponder (290), und wobei der Empfangssensor (280) und der Transponder (290) dazu angepasst sind, eine Position der Kolbenstange (110) in dem Zylinder (70) bereitzustellen; und
ein Überwachungs- und Anzeigesystem (300) in Kommunikation mit dem ersten Druckwandler (260), dem Drucksensor (250), dem zweiten Druckwandler (200), dem Empfangssensor (280), dem Transponder (290), dem oberen Drehaktor (220) des oberen Ventils (210), dem unteren Drehaktor (240) des unteren Ventils (230), und wobei das Überwachungs- und Anzeigesystem (300) dazu angepasst ist, das obere Ventil (210) und das untere Ventil (230) nach Bedarf zu öffnen bzw. zu schließen.

## Revendications

1. Accumulateur à piston sous-marin (20) destiné à être utilisé avec des blocs d'obturation de puits dans des opérations se rapportant à des puits de pétrole et de gaz comportant :
une bouteille hydraulique (30), ayant un cylindre (70), une cloison supérieure (80), et une cloison inférieure (90), une cloison centrale (100), une tige de piston (110) centrée dans ladite cloison centrale (100) ayant un piston supérieur (120), un piston inférieur (130), dans lequel ladite cloison supérieure (80) et ledit piston supérieur (120) définissent une chambre supérieure (160) et ladite cloison inférieure (90) et ledit piston inférieur (130) définissent une chambre inférieure (170), dans lequel la chambre inférieure a un premier transducteur de pression (260) servant à mesurer la pression dans ladite chambre inférieure (170) ;
une bouteille de gaz (40) ayant une chambre servant à retenir du gaz, une valve supérieure (210) commandée par un actionneur rotatif supérieur (220) servant à ouvrir et à fermer ladite valve supérieure (210), une valve inférieure (230) commandée par un actionneur rotatif inférieur (240) servant à ouvrir et à fermer ladite valve inférieure (230), et un capteur de pression (250) dans ladite chambre servant à mesurer la pression dans ladite chambre ;
un orifice (190) entre ladite bouteille de gaz et ladite chambre supérieure dudit cylindre, dans lequel ledit orifice a un deuxième transducteur de pression (200) servant à mesurer la pression de la chambre supérieure dudit cylindre et de ladite chambre de ladite bouteille de gaz (40) ;
un système de capteur de position de piston (270) ayant un capteur de réception (280) monté sur ladite bouteille hydraulique (30), un transpondeur (290) monté sur ladite tige de piston (110), et dans lequel ledit capteur de réception (280) et ledit transpondeur (290) sont adaptés pour fournir une position de ladite tige de piston (110) dans ledit cylindre (70) ; et
un système de surveillance et d'affichage (300) en communication avec ledit premier transducteur de pression (260), ledit capteur de pression (250), ledit deuxième transducteur de pression (200), ledit capteur de réception (280), ledit transpondeur (290), ledit actionneur rotatif supérieur (220) de ladite valve supérieure (210), ledit actionneur rotatif inférieur (240) de ladite valve inférieure (230), et dans lequel ledit système de surveillance et d'affichage (300) est adapté pour ouvrir et fermer respectivement ladite valve supérieure (210) et ladite valve inférieure (230) tel qu'on le souhaite.
